# FASCICULE DE BREVET EUROPEEN

(11) **EP 1 335 465 B1**
(45) Date de publication et mention de la délivrance du brevet: **29.03.2017**
(21) Numéro de dépôt: 03290097.9
(22) Date de dépôt: 14.01.2003
(51) Int. Cl.: H02G 5/02

(54) **Procédé de fabrication d'un dispositif de transmission de puissance électrique**
Verfahren zur Herstellung einer Vorrichtung zur Übertragung elektrischer Leistung
Method for making a device for the transmission of electric power

(30) Priorité: 08.02.2002 FR 0201586
(43) Date de publication de la demande: 13.08.2003
(73) Titulaire: PIOCH S.A., 06510 Carros (FR)
(72) Inventeur: Pioch, Olivier, 06200 Nice (FR)
(74) Mandataire: Lavoix

(56) Documents cités:
- EP-A- 0 944 101
- FR-A- 2 545 641

## Description

La présente invention concerne un procédé de fabrication d'un dispositif de transmission de puissance électrique au travers d'une paroi, du type comportant au moins deux barres conductrices ayant chacune une section transversale supérieure à 700 mm² et une plaque de support commune auxdites barres conductrices, chaque barre conductrice traversant la plaque de support au travers d'un orifice et faisant saillie de part et d'autre de la plaque de support.

Ses documents EP 0 944 101 A1 et FR 2 545 641 A décrivent un procédé de fabrication d'un dispositif de transmission de puissance électrique au travers d'une paroi selon l'art antérieur. De tels dispositifs de transmission de puissance sont utilisés notamment pour le passage de conducteurs électriques au travers d'une paroi d'un transformateur de forte capacité.

Lorsque l'intensité du courant circulant dans chaque barre est supérieure à 1000 Ampères pour une fréquence industrielle par exemple de 50 Hz, la plaque de support du dispositif de transmission de puissance doit être réalisée dans un matériau non magnétique afin d'éviter un échauffement magnétique dû à la circulation de courants électriques de Foucault dans les barres.

La paroi est alors par exemple réalisée dans un acier inoxydable amagnétique, en matière plastique ou dans un matériau composite.

Pour la fabrication de tels dispositifs de transmission de puissance, il est connu de réaliser d'abord par usinage une plaque comportant des orifices de passage des barres conductrices puis de fixer les barres conductrices au travers des orifices préalablement aménagés dans la plaque.

Le dispositif devant supporter des températures élevées de l'ordre de 130°C, la plaque est formée par exemple d'un matériau composite avec une forte charge de fibres de verre. La matrice du matériau composite est composée par exemple de polyester.

L'usinage de telles plaques de matériau composite est délicat du fait de la présence des fibres de verre.

Par ailleurs, on connaît également des dispositifs de transmission de puissance comportant plusieurs barres conductrices dont la partie médiane est noyée dans une même plaque isolante, cette plaque étant surmoulée sur les barres conductrices dans une résine adaptée.

De tels dispositifs présentent l'inconvénient d'être sujets à la formation de fissures dans la plaque de support au voisinage des barres, du fait de la dilatation thermique des barres. Le phénomène est particulièrement marqué lorsque les barres présentent, en section transversale, une forme oblongue, la largeur de chaque barre étant très supérieure à son épaisseur.

L'invention a pour but de proposer un procédé de fabrication d'un dispositif de transmission de puissance électrique, qui confère au dispositif un coût de fabrication faible et une bonne résistance du dispositif aux fissures en cas de dilatation thermique des barres.

A cet effet, l'invention a pour objet un procédé de fabrication d'un dispositif de transmission de puissance du type précité, caractérisé en ce qu'il comporte les étapes de :
- préfabriquer dans un moule, à partir d'un matériau initialement malléable, la plaque de support présentant les orifices de passage pour les barres conductrices, les orifices étant venus de moulage ;
- introduire une barre conductrice dans chaque orifice de la plaque de support préalablement moulée ; et
- assurer la liaison entre les barres conductrices et la plaque de support.

Suivant des modes particuliers de mise en oeuvre, le procédé comporte l'une ou plusieurs des caractéristiques suivantes :
- la plaque de support est préfabriquée par injection de matière en fusion dans une cavité de dimensions constantes du moule ;
- la plaque de support est préfabriquée par compression d'un lingot de matière malléable entre les mors complémentaires d'une mâchoire définissant le moule ;
- il comporte une étape consistant à assurer une étanchéité entre chaque barre conductrice et la plaque de support au cours de laquelle au moins un joint d'étanchéité est rapporté autour de chaque barre conductrice, et le ou chaque joint est enserré entre la plaque de support et une bague rapportée autour de chaque barre, la bague et la plaque de support étant maintenues sollicitées l'une vers l'autre ;
- les barres conductrices ont, en section, une largeur au moins six fois supérieure à leur épaisseur; et
- lors de la préfabrication dans un moule de la plaque de support, des conduits de passage de tiges pour la transmission de courants électriques de faible intensité sont formés au travers de la plaque, lesdits conduits étant venus de moulage, et une tige conductrice dont la section transversale est inférieure à 200 mm² est introduite et immobilisée dans chaque conduit de la plaque de support préalablement moulée.

L'invention sera mieux comprise à la lecture de la description qui va suivre, donnée uniquement à titre d'exemple et faite en se référant aux dessins, sur lesquels :
- La figure 1 est une vue en perspective d'un dispositif de transmission de puissance électrique ; et
- La figure 2 est une vue en perspective éclatée du même dispositif.

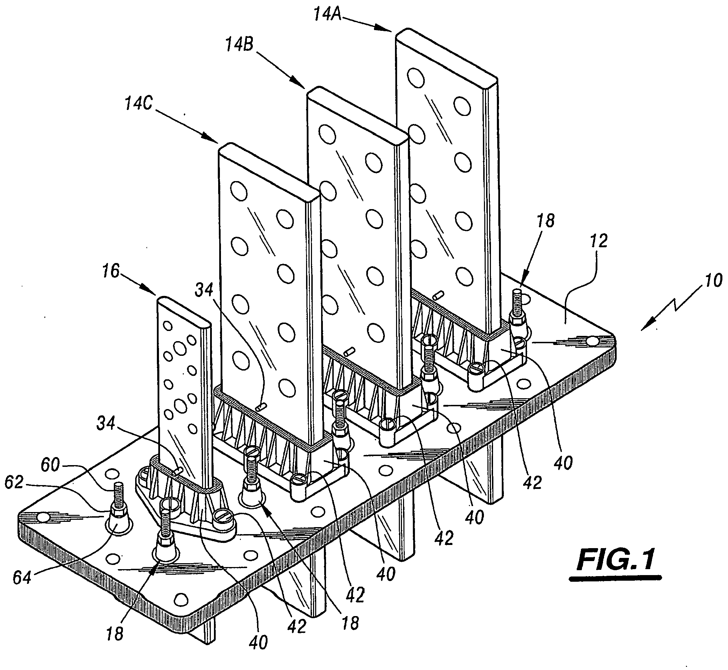

Le dispositif 10 illustré sur la figure 1 est destiné à la transmission de puissance électrique au travers d'une paroi. Un tel dispositif, au sens de la présente description, est adapté pour permettre la transmission d'une intensité maximale supérieure à 500 A par phase.

Le dispositif illustré est adapté notamment pour la transmission au travers de cette paroi des trois phases et du neutre d'un courant électrique triphasé de puissance élevée. Le courant électrique transporté est supposé de forte intensité, celle-ci étant notamment de l'ordre ou supérieure à 1000 A par phase.

Le dispositif comporte essentiellement une plaque de support isolante 12 et notamment quatre barres conductrices traversantes 14A, 14B, 14C et 16 pour la transmission de quatre courants électriques distincts au travers de la plaque. Les barres conductrices font chacune saillie de part et d'autre de la plaque.

Le dispositif comporte en outre dix traversées 18 de petit diamètre permettant la circulation de courant électrique de faible intensité entre les deux côtés de la plaque 12.

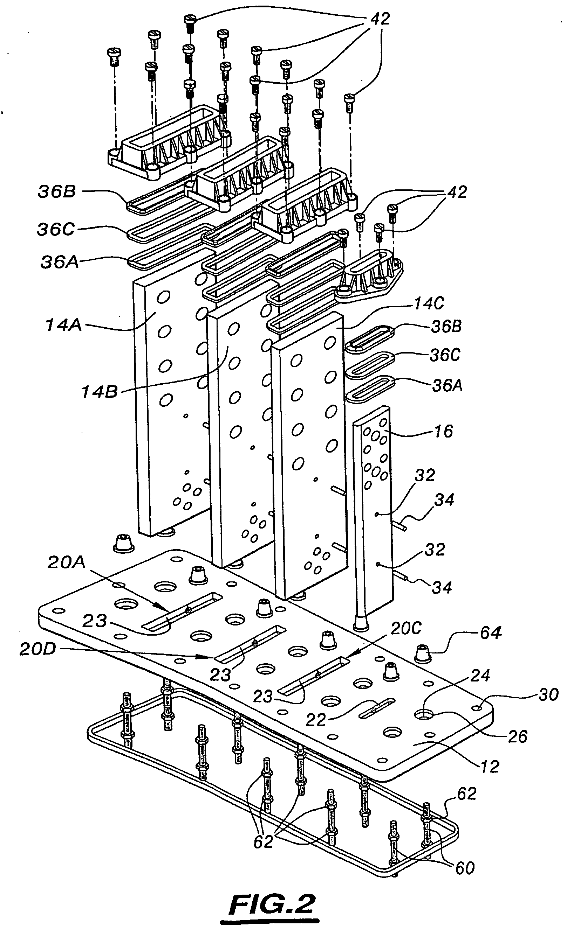

Comme illustré sur la figure 2, la plaque 12 est d'épaisseur constante et est généralement rectangulaire. Elle présente quatre orifices généralement rectangulaires 20A, 20B, 20C et 22 permettant le passage des barres 14A, 14B, 14C et 16 respectivement.

Suivant l'une des faces principales de la plaque, chaque orifice de passage des barres est bordé par un évasement périphérique 23 définissant un siège d'appui pour un joint d'étanchéité. L'évasement 23 définit généralement une cuvette dont le fond annulaire concave est incliné et converge vers la partie centrale du fond, où débouche l'orifice de passage de la barre.

En outre, la plaque 12 est traversée de dix conduits circulaires 24 pour les traversées 18. Les conduits 24 sont chacun bordés sur une face de la plaque 12 d'une cuvette annulaire 26 propre à recevoir un joint torique non représenté.

En outre, la plaque 12 présente des perçages 30 permettant sa fixation à une paroi, par exemple au moyen de vis. Ces perçages sont ménagés régulièrement à la périphérie de la plaque.

Selon l'invention, la plaque 12 est formée dans un moule à partir d'une matière malléable. En particulier, les orifices 20A, 20B, 20C et 22 et les évasements associés 23 sont venus de moulage.

Il en est de même des conduits 24, des cuvettes 26 et des perçages 30.

Les barres conductrices 14A, 14B, 14C sont réalisées en métal et notamment en cuivre. Elles ont une section transversale supérieure à 700 mm². Ces barres sont par exemple généralement rectangulaires en section. Les dimensions des barres sont par exemple de 120 mm x 12 mm.

La barre 16 est de section plus réduite. Elle a par exemple des dimensions égales à 63 mm x 12 mm.

De manière générale, les barres conductrices pour une intensité supérieure à 2000 A ont en section une largeur au moins six fois supérieure à leur épaisseur.

Les orifices 20A, 20B, 20C et 22 de passage des barres ont une forme complémentaire à celle des barres et présentent des dimensions légèrement supérieures pour ménager un jeu de dilatation entre les barres et la plaque 12.

A chacune de leurs extrémités, les barres présentent des perçages adaptés pour la réception de moyens de fixation des câbles électriques devant être y connectés, de part et d'autre de la plaque 12.

En outre, les barres sont chacune traversées de part en part par deux orifices traversants 32 disposés de part et d'autre de la plaque et propres à la réception de goupilles 34 d'immobilisation axiale des barres par rapport à la plaque 12.

Pour assurer l'étanchéité entre la plaque 12 et chaque barre, deux joints 36A, 36B successifs sont engagés coaxialement autour de chaque barre. Un premier joint d'extrémité 36A présente en section un profil complémentaire à celui de l'évasement périphérique 23 des orifices 20A, 20B, 20C et 22. En particulier, le joint 36A présente suivant sa surface tournée vers la plaque 12 une surface biseautée dont la normale est tournée vers l'extérieur du joint. Le second joint d'extrémité 36B est identique au premier joint d'extrémité mais celui-ci est disposé en sens opposé. Entre ceux-ci est enserré une entretoise rigide 36C.

Une bague 40 de compression des joints est rapportée autour de chaque barre et est maintenue immobilisée par rapport à la plaque 12 par des vis de serrage 42 engagées dans la plaque 12. Chaque bague présente intérieurement un évasement en forme de cuvette adapté pour la réception du second joint d'extrémité 36B. Ce dégagement est progressivement divergent en direction de la face de la bague tournée vers la plaque 12.

Chaque traversée 18 comporte une tige filetée 60 comportant à chaque extrémité un écrou 62. Elle comporte en outre une entretoise 64 adaptée pour être enserrée entre un écrou d'extrémité 62 et la plaque 12 en appui sur le joint torique disposé dans la cuvette 26.

Les tiges 60 sont destinées au transport de signaux électriques de mesure ou de commande ayant une faible intensité. Leur section transversale est inférieure à 200 mm².

Selon l'invention, pour la fabrication d'un tel dispositif de transmission de puissance, la plaque 12 est d'abord préfabriquée par moulage.

Suivant un premier mode de réalisation, la plaque 12 est d'abord injectée seule dans une cavité de dimensions constantes d'un moule à partir d'un matériau fluidifié par chauffage. Le matériau utilisé pour l'injection de la plaque est par exemple un polyamide, un polybutylène terephtalate ou un polyester.

Le moule utilisé pour la fabrication de la plaque 12 est constitué par exemple de deux demi-coquilles assemblées présentant chacune une empreinte. Ces deux demi-coquilles sont telles que, lorsqu'elles sont accolées l'une à l'autre, les deux empreintes qui y sont ménagées délimitent ensemble un espace clos définissant la forme extérieure de la plaque 12. Quatre tiroirs mobiles sont engagés dans cet espace clos pour former les orifices 20A, 20B, 20C et 22 de passage des barres.

De manière analogue, des tiroirs mobiles, ou des protubérances complémentaires faisant saillie dans chaque empreinte sont prévus pour délimiter les conduits de passage des traversées et les perçages 30 de fixation de la plaque.

Après refroidissement du matériau injecté et durcissement de celui-ci, la plaque 12 est sortie du moule.

Suivant un autre mode de réalisation, la plaque 12 est formée à partir d'un lingot de matière malléable telle que du polyester. Ce lingot, alors qu'il est échauffé, est pressé entre deux mors d'une mâchoire définissant un moule dont la forme de la cavité intérieure correspond exactement, lorsque la mâchoire est fermée, à la forme de la plaque 12, notamment avec les orifices 20A, 20B, 20C et 22 et les conduits 24. La plaque 12 est obtenue après réticulation du lingot pressé et extraction de celui-ci hors du moule.

Après fabrication préalable de la plaque 12, les barres 14A, 14B, 14C et 16 sont engagées dans les orifices correspondants. Les deux joints 36A, 36B, l'entretoise 36C et les bagues de maintien 40 sont engagés autour de chaque barre. Les goupilles sont ensuite introduites dans les orifices pour immobiliser axialement les barres. Les bagues sont ensuite serrées contre la plaque 20 par mise en place des vis de serrage 42, afin d'assurer une compression des joints radialement contre les barres 14A, 14B, 14C et 16 et axialement entre la plaque 12 et les bagues 40.

De même, les traversées 18 sont mises en place par engagement des tiges 60 au travers des conduits 24. Les joints toriques et les entretoises 64 sont engagés autour des tiges 60 et les écrous d'extrémité 62 sont vissés à chaque extrémité des tiges 60.

Un dispositif de transmission de puissance électrique tel que décrit ici peut être fabriqué pour un coût modique dans la mesure où la plaque 12 est obtenue par moulage. De plus, dans la mesure où la plaque n'est pas surmoulée sur les barres conductrices, un jeu fonctionnel suffisant peut être ménagé entre la plaque 12 et les barres, au niveau des orifices de réception des barres. Ainsi, tout risque de fissuration de la plaque 12 est écarté lors de la dilatation des barres conductrices.

Enfin, dans la mesure où les tiges 60 des traversées destinées à la transmission de signaux électriques de mesure ou de commande sont portées par la même plaque 12 que celle utilisée pour le support des barres conductrices destinées à la transmission de puissance, le dispositif permet à la fois la transmission d'informations et de puissance, pour un coût modique. En effet, les conduits 24 assurant le passage des traversées formées par les tiges 60 sont venus de moulage lors de la préfabrication de la plaque 12.

## Revendications

1. Procédé de fabrication d'un dispositif (10) de transmission de puissance au travers d'une paroi comportant au moins deux barres conductrices (14A, 14B, 14C, 16) ayant chacune une section transversale supérieure à 700 mm² et une plaque de support (12) commune auxdites barres conductrices, chaque barre conductrice traversant la plaque de support (12) au travers d'un orifice (20A, 20B, 20C, 22) et faisant saillie de part et d'autre de la plaque de support (12), **caractérisé en ce qu'**il comporte les étapes de :
- préfabriquer dans un moule, à partir d'un matériau initialement malléable, la plaque de support (12) présentant les orifices (20A, 20B, 20C, 22) de passage pour les barres conductrices (14A, 14B, 14C, 16), les orifices (20A, 20B, 20C, 22) étant venus de moulage ;
- introduire une barre conductrice (14A, 14B, 14C, 16) dans chaque orifice (20A, 20B, 20C, 22) de la plaque de support (12) préalablement moulée ; et
- assurer la liaison entre les barres conductrices (14A, 14B, 14C, 16) et la plaque de support (12).

2. Procédé de fabrication selon la revendication 1, **caractérisé en ce que** la plaque de support (12) est préfabriquée par injection de matière en fusion dans une cavité de dimensions constantes du moule.

3. Procédé de fabrication selon la revendication 1, **caractérisé en ce que** la plaque de support (12) est préfabriquée par compression d'un lingot de matière malléable entre les mors complémentaires d'une mâchoire définissant le moule.

4. Procédé de fabrication selon l'une quelconque des revendications précédentes, **caractérisé en ce qu'**il comporte une étape consistant à assurer une étanchéité entre chaque barre conductrice (14A, 14B, 14C, 16) et la plaque de support (12) au cours de laquelle au moins un joint d'étanchéité (36A, 36B, 36C) est rapporté autour de chaque barre conductrice, et le ou chaque joint (36A, 36B, 36C) est enserré entre la plaque de support (12) et une bague (40) rapportée autour de chaque barre, la bague et la plaque de support (12) étant maintenues sollicitées l'une vers l'autre.

5. Procédé de fabrication selon l'une quelconque des revendications précédentes, **caractérisé en ce que** les barres conductrices (14A, 14B, 14C, 16) ont, en section, une largeur au moins six fois supérieure à leur épaisseur.

6. Procédé de fabrication selon l'une quelconque des revendications précédentes, **caractérisé en ce que**, lors de la préfabrication dans un moule de la plaque de support (12), des conduits (24) de passage de tiges pour la transmission de courants électriques de faible intensité sont formés au travers de la plaque, lesdits conduits (24) étant venus de moulage, et **en ce qu'**une tige conductrice (60) dont la section transversale est inférieure à 200 mm² est introduite et immobilisée dans chaque conduit (24) de la plaque de support (12) préalablement moulée.

## Patentansprüche

1. Verfahren zur Herstellung einer Vorrichtung (10) zur Kraftübertragung durch eine Wand, umfassend mindestens zwei leidende Stangen (14A, 14B, 14C, 16) mit jeweils einem Querschnitt von mehr als 700 mm² und eine Trägerplatte (12), die den leitenden Stangen gemeinsam ist, aufweisen, wobei jede leitende Stange die Trägerplatte (12) durch eine Öffnung (20A, 20B, 20C, 22) durchquert und auf beiden Seiten der Trägerplatte (12) hervorsteht, **dadurch gekennzeichnet, dass** es die folgenden Schritte umfasst:
- Vorfertigen in einer Form, ausgehend von einem anfänglich verformbaren Material, der Trägerplatte (12), die die Öffnungen (20A, 20B, 20C, 22) zum Durchgang für die leitenden Stangen (14A, 14B, 14C, 16) aufweist, wobei die Öffnungen (20A, 20B, 20C, 22) aus der Formung stammen;
- Einführen einer leitenden Stange (14A, 14B, 14C, 16) in jede Öffnung (20A, 20B, 20C, 22) der Trägerplatte (12), die zuvor geformt wurde; und
- Sicherstellen der Verbindung zwischen den leitenden Stangen (14A, 14B, 14C, 16) und der Trägerplatte (12).

2. Verfahren zur Herstellung nach Anspruch 1, **dadurch gekennzeichnet, dass** die Trägerplatte (12) durch Injektion von Schmelzmaterial in einen Hohlraum mit konstanten Abmessungen der Form vorgefertigt wird.

3. Verfahren zur Herstellung nach Anspruch 1, **dadurch gekennzeichnet, dass** die Trägerplatte (12) durch Kompression eines Barrens aus verformbarem Material zwischen den komplementären Seiten einer Backe, die die Form definiert, vorgefertigt sind.

4. Verfahren zur Herstellung nach einem beliebigen der vorhergehenden Ansprüche, **dadurch gekennzeichnet, dass** es einen Schritt umfasst, der darin besteht, eine Dichtigkeit zwischen der leitenden Stange (14A, 14B, 14C, 16) und der Trägerplatte (12) sicherzustellen, im Laufe dessen mindestens eine Dichtung (36A, 36B, 36C) um jede leitende Stange aufgesetzt wird und die oder jede Dichtung (36A, 36B, 36C) zwischen der Trägerplatte (12) und einem Ring (40) umschlossen ist, der um jede Stange aufgesetzt ist, wobei der Ring und die Trägerplatte (12) in gegenseitigem Eingriff gehalten werden.

5. Verfahren zur Herstellung nach einem beliebigen der vorhergehenden Ansprüche, **dadurch gekennzeichnet, dass** die leitenden Stangen (14A, 14B, 14C, 16) im Schnitt eine Länge aufweisen, die mindestens sechsmal größer als ihre Dicke ist.

6. Verfahren zur Herstellung nach einem beliebigen der vorhergehenden Ansprüche, **dadurch gekennzeichnet, dass** bei der Vorfertigung der Trägerplatte (12) in einer Form Kanäle (24) zum Durchgang von Schäften für die Übertragung von elektrischen Strömen mit niedriger Intensität durch die Platte gebildet sind, wobei die Kanäle (24) aus der Formung stammen, und dadurch, dass ein leitender Schaft (60), dessen Querschnitt weniger als 200 mm² beträgt, in jeden Kanal (24) der zuvor geformten Trägerplatte (12) eingeführt und immobilisiert wird.

## Claims

1. A method for manufacturing a device (10) for transmitting power through a wall including at least two conducting bars (14A, 14B, 14C, 16) each having a cross-section larger than 700 mm² and a support plate (12) shared by said conducting bars, each conducting bar traversing the support plate (12) through an orifice (20A, 20B, 20C, 22) and protruding on either side of the support plate (12), **characterized in that** it includes the following steps:
- pre-fabricating, in a mold and from a material that is initially malleable, the support plate (12) having the passage orifices (20A, 20B, 20C, 22) for the conducting bars (14A, 14B, 14C, 16), the orifices (20A, 20B, 20C, 22) being integral by molding;
- inserting a conducting bar (14A, 14B, 14C, 16) into each orifice (20A, 20B, 20C, 22) of the previously molded support plate (12); and
- providing the connection between the conducting bars (14A, 14B, 14C, 16) and the support plate (12).

2. The manufacturing method according to claim 1, **characterized in that** the support plate (12) is prefabricated by injecting molten material into a cavity with constant dimensions of the mold.

3. The manufacturing method according to claim 1, **characterized in that** the support plate (12) is prefabricated by compressing an ingot of a malleable material between the complementary jaws of a clamp defining the mold.

4. The manufacturing method according to any one of the preceding claims, **characterized in that** it includes a step consisting of ensuring sealing between each conducting bar (14A, 14B, 14C, 16) and the support plate (12) during which at least one sealing gasket (36A, 36B, 36C) is attached around each conducting bar, and the or each seal (36A, 36B, 36C) is gripped between the support plate (12) and a ring (40) attached around each bar, the ring and the support plate (12) being kept stressed toward one another.

5. The manufacturing method according to any one of the preceding claims, **characterized in that** the conducting bars (14A, 14B, 14C, 16) have, in section, a width at least six times larger than their thickness.

6. The manufacturing method according to any one of the preceding claims, **characterized in that**, during the prefabrication of the support plate (12) in a mold, rod passage conduits (24) for transmitting low-intensity electric currents are formed through the plate, said conduits (24) being integral by molding, and **in that** a conducting rod (60) having a cross-section smaller than 200 mm² is inserted and immobilized in each conduit (24) of the previously molded support plate (12).
